Europäisches Patentamt

European Patent Office

Office européen des brevets

(19)

(11) EP 0 969 627 A1

(12) **DEMANDE DE BREVET EUROPEEN**

(43) Date de publication:
05.01.2000 Bulletin 2000/01

(51) Int Cl.⁷: **H04L 12/24**

(21) Numéro de dépôt: **99401597.2**

(22) Date de dépôt: **25.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.06.1998 FR 9808296**

(71) Demandeur: **BULL S.A.**
**78434 Louveciennes Cedex (FR)**

(72) Inventeur: **Leygues, François**
**75004 Paris (FR)**

(74) Mandataire: **Denis, Hervé et al**
**Direction de la**
**Propriété Industrielle Bull S.A.**
**Poste courrier: LV-58F35**
**68, route de Versailles**
**78434 Louveciennes Cedex (FR)**

(54) **Procédé et dispositif d'accès à une base de données relationnelle à partir d'une application d'administration**

(57)    Le système SYS inclut au moins une base de données relationnelle BDDR, au moins un système de gestion SG, une base de données BDDR étant associée à un protocole de gestion et comprenant des objets OBJ manipulables, un système de gestion SG incluant au moins une application d'administration APP associée à un protocole de gestion de type CMIS/CMIP et dont est issue une requête REQ1, et un premier arbre de contenance MIB1 orienté objet, ledit arbre MIB1 comprenant des objets conforme au protocole de gestion CMIS/CMIP. L'utilisateur de l'application d'administration APP accède directement, au moyen d'un agent intégrateur AI2 ayant une configuration préalable, à une base de données relationnelle BDDR à partir d'une application d'administration de type CMIS/CMIP.

```
ROOT ──→ classe BASE ──→ classe TABLE ┌─→ classe INDEX ┌─→ classe ATTRIBUTS
         nom: BDDR        nom: TAB    │   nom: OBJ1    │   nom: ATT1
                                      │                ├─→ classe ATTRIBUTS
                                      │                │   nom: ATT2
                                      │                └─→ classe ATTRIBUTS
                                      │                    nom: ATT3
                                      │
                                      ├─→ classe INDEX ┌─→ classe ATTRIBUTS
                                      │   nom: OBJ2    │   nom: ATT1
                                      │                ├─→ classe ATTRIBUTS
                                      │                │   nom: ATT2
                                      │                └─→ classe ATTRIBUTS
                                      │                    nom: ATT3
                                      │
                                      └─→ classe INDEX ┌─→ classe ATTRIBUTS
                                          nom: OBJ3    │   nom: ATT1
                                                       ├─→ classe ATTRIBUTS
                                                       │   nom: ATT2
                                                       └─→ classe ATTRIBUTS
                                                           nom: ATT3
```

FIGURE 2

## Description

### Domaine technique

L'invention concerne un procédé d'accès, dans un système informatique, à une base de données à partir d'une application d'administration. L'invention s'applique à toute base de données émergente ou à venir dont le modèle serait comparable au modèle relationnel. Par conséquent, le terme base de données relationnelle signifie une base dont le modèle est comparable au modèle relationnel. Le langage d'interrogation d'une base de données relationnelle peut être le langage de type SQL (Structured Query Langage) connu de l'homme du métier.

Le système informatique comprend une machine ou plusieures machines reliées entre elles par l'intermédiaire d'un réseau de type LAN (Local Area Network), WAN (Wide Area Network) ou INTERNET. Ce système peut être un système distribué ou non, hétérogène ou non.

Dans ce système informatique, un système de gestion de type OPENMASTER (marque déposée), connue de l'homme du métier, est particulièrement bien adapté à la présente invention. Ce système de gestion peut être assimilé à un ensemble de services qui interagissent entre eux pour donner une représentation virtuelle du monde réel qui est le système informatique. C'est une représentation virtuelle qu'un administrateur manipule (surveillance, action) pour gérer le monde réel. La représentation virtuelle porte sur des objets virtuels du monde réel et constitue un modèle objet.

Le système de gestion inclut au moins une application d'administration. Le protocole des applications d'administration sur lequel s'applique l'invention est de type CMIS (Common Managment Information Service) ou CMIP (Common Managment Information Protocol) selon que l'application se repose sur le modèle OSI (Open System Interconnection) d'architecture en couche de l'ISO (International Organization for Standardization) ou sur le modèle TCP/IP (Transport Control Protocol - Internet Protocol).

Un système informatique distribué hétérogène contient en général une variété de protocoles de gestion. Dans ce système, chaque machine est associée à un protocole de gestion. Dans ce système informatique, au moins un agent est, en général situé sur une machine du système informatique. Les agents et les systèmes de gestions coexistent et communiquent pour masquer l'hétérogénéité du réseau. Chaque agent supporte un protocole tel que le protocole SNMP (Simple Network Managment Protocol), le protocole CMIS/CMIP, le protocole DSAC (Distributed Systems Administration and Control) ou d'autres protocoles. Le système de gestion commande les agents, et l'agent répond et notifie des événements en utilisant un protocole de gestion identique SNMP, CMIS/CMIP ou DSAC/AEP (DSAC Administrative Exchange Protocol).

L'invention concerne également un dispositif pour la mise en oeuvre d'un tel procédé.

### L'art antérieur

De manière générale, le modèle de données relationnel est couramment utilisé à cause de sa simplicité de représentation des données et de la meilleure productivité des développeurs et des utilisateurs. Ce modèle de données permet une représentation tabulaire aussi bien des objets que des associations entre objets. Une base de données relationnelle se présente comme un ensemble de relations, d'où le nom du modèle. Une base de données est associée à un schéma conceptuel qui décrit la structure et le type de données qu'elle contient et éventuellement les contraintes ou règles qui doivent toujours être vérifiées. Toute relation définit un schéma qui décrit sa structure, et une extension qui correspond à l'état de cette relation à un instant donné. Le schéma d'une relation est composé d'un ensemble d'attributs (ou colonnes), dont un sous-ensemble constitue la clé qui permet d'identifier les autres attributs de la relation ou un élément de la relation. L'extension d'une relation est constituée par un ensemble de tuples (ou lignes) dans une table. Un tuple correspond à un ensemble de valeurs prises par les attributs d'une table pour représenter un objet ou un lien entre des objets du monde réel. Dans cet esprit, l'utilisation d'un langage standard de définition et de manipulation de données tel que le langage SQL (Structured Query Language), apparaît très avantageuse pour la définition et la manipulation des bases de données relationnelles. Le langage SQL est associé à un protocole de gestion de type SQL.NET, connu de l'homme du métier. Le modèle, de plus, permet de donner des informations sémantiques supplémentaires sur les attributs des relations en imposant des contraintes d'intégrité référentielles. Ainsi, en termes de clés, un attribut défini comme clé permet de déterminer de façon unique le tuple dont il fait partie, une valeur donnée pour cet attribut ne pouvant pas se retrouver dans deux tuples différents.

Outre la simplicité et l'amélioration des performances, dues à l'utilisation du modèle de données relationnel, la normalisation d'un langage tel que le langage SQL, facile d'utilisation, a contribué à la prolifération des bases de données relationnelles. Ainsi, jusqu'à présent, la plupart des applications développées, et ceci depuis plus d'une décennie, sont des applications conçues pour exploiter des systèmes de gestion spécifiques de bases de données relationnelles.

Mais la tendance actuelle est de rendre possible un accès à une base de données relationnelle à partir d'une application d'administration de type CMIS/CMIP. Un système de gestion incluant une application d'administration de type CMIS/CMIP doit donc être capable de dialoguer avec une base de données relationnelle.

Un gros problème est qu'il n'existe pas d'outil de conversion de protocoles qui soit capable de convertir, de façon simple, un protocole de type CMIS/CMIP en un protocole propre à la base de données. Par conséquent, il devient indispensable de trouver une solution rationnelle et efficace à ce problème d'accès.

Pour résoudre ce problème plusieurs solutions ont été proposées, dont les deux suivantes.

Une première solution consiste à inclure des requêtes de type SQL intégralement dans un programme, comme cela est possible avec l'utilisation conjointe d'un système de gestion de base de données relationnelles et d'un langage de programmation classique, la correspondance des types de données étant alors réalisée par le programmeur. Le gros inconvénient de cette solution est qu'elle est très lourde à mettre en oeuvre pour le programmeur d'application car elle suppose de sa part une connaissance parfaite du langage SQL, du modèle relationnelle, du schéma de base des données. De plus, la correspondance entre la notion d'arbre de contenance peut se traduire de plusieurs manières en SQL et surtout de manière très complexe. Elle est donc très peu pratiquée.

Une seconde solution est celle décrite dans la demande de brevet européen EP 0 702 312 de la demanderesse. Cette solution consiste, à partir du schéma de base de la base de données relationnelle existante, à générer des interfaces orientées objet. Ce schéma est composé d'un jeu de classes représentant les entités stockées dans la base de données. Cette solution est assez difficile à mettre en oeuvre du fait qu'elle impose de convertir une base de type SQL en des interfaces de programmation. Cette méthode impose de plus l'utilisation du langage C++.

## Sommaire de l'invention

Un premier but de l'invention est de permettre une communication simple, entre une application de type CMIS/CMIP et une base de données relationnelle.

Un second but est de permettre une visibilité des différents objets de la base de données à partir d'une application de type CMIS/CMIP.

Un troisième but est rendre accessible les objets de type SQL par l'intermédiaire d'applications dites génériques.

Un quatrième but est de tirer profit au maximum des fonctionnalités existantes des différents composants d'un système de gestion.

A cet effet, l'invention a pour objet un procédé d'accès à au moins une base de données relationnelle d'un système informatique à partir d'au moins un système de gestion, une base de données relationnelle étant associée à un protocole de gestion et comprenant des objets manipulables, un système de gestion incluant au moins une application d'administration associée à un protocole de gestion de type CMIS/CMIP et dont est issue une requête, et un arbre de contenance orienté objet, ledit arbre comprenant des objets conformes au protocole de gestion CMIS/CMIP, caractérisé en ce qu'il consiste, pour un utilisateur de l'application d'administration, au moyen d'un agent intégrateur ayant une configuration préalable, à accéder directement à une base de données relationnelle à partir d'une application d'administration de type CMIS/CMIP.

Il en résulte un système informatique comprenant au moins un système de gestion incluant au moins une application de type CMIS/CMIP et au moins un arbre de contenance orienté objet, ledit système comprenant au moins une base de données, caractérisé en que le système de gestion comporte un agent intégrateur pour la mise en oeuvre du procédé.

L'invention sera mieux comprise à la lecture de la description qui suit, donnée à titre d'exemple et faite en référence aux dessins annexés.

## Dans les dessins:

- la figure la représente une vue synoptique partielle d'un système informatique conforme à l'invention;

- la figure 1b est une table contenue dans une base de données relationnelle; et

- la figure 2 est un vue partielle d'un arbre de contenance inclu dans le système de gestion pour la mise en oeuvre du procédé conformément à la présente invention.

## Description détaillée d'exemples illustrant l'invention

Pour simplifier la description, les mêmes éléments illustrés dans les dessins portent les mêmes références.

Sur la figure la, on a représenté un système informatique SYS distribué de type hétérogène. Dans l'exemple illustré, ce système SYS inclut un système gestionnaire SG. Le système de gestion est un système purement logiciel. Ce système de gestion peut être compris dans une station de travail. Le système SYS inclut aussi au moins une machine. Dans l'exemple,. deux machines MAC et BDDR sont représentées. La machine MAC comprend des objets manipulables. Une manipulation inclut des commandes connues de l'homme du métier. Le protocole de gestion de la machine MAC peut être indifféremment un protocole de type SNMP, CMIS/CMIP ou DSAC/AEP. Dans notre exemple, le système SG inclut une application d'administration APP supportant un protocole de type CMIS conforme au modèle OSI (Common Managment Information service), connu de l'homme du métier. Dans l'invention, l'application d'administration APP est de type logicielle. Cette application peut être lancée par l'intermédiaire d'un utilisateur UT de ce système de gestion SG. Un utilisateur peut être un administrateur. Le système SG comprend aussi, dans l'exemple illustré, un routeur CDSP (CMIS Dispatcher Process), connu de l'homme du métier. Dans l'invention, ce routeur CDSP comprend un programme comprenant lui-même une méthode algorithmique de routage. Le système gestionnaire SG comprend également au moins un agent intégrateur AI1 associé à un protocole de gestion. Dans l'exemple illustré, l'agent intégrateur AI1 est associé au protocole de gestion de la machine MAC. De façon générale, un agent intégrateur est de type logiciel et procure des services. Un service peut être une conversion du protocole de gestion. Dans l'exemple illustré, l'agent intégrateur AI1 convertit le protocole de gestion du système de gestion SG en un protocole de gestion associé à la machine MAC. Réciproquement, l'agent intégrateur AI1 convertit le protocole de gestion associé à la machine MAC en un protocole de gestion associé au système de gestion SG. Un agent intégrateur ne se limite pas à ce type de service et procure d'autres services. De manière générale, une conversion de protocole de gestion s'effectue naturellement entre un système de gestion SG et une machine MAC qui supportent des protocoles de gestion différents.

Le système de gestion SG comprend aussi un arbre de contenance MIB1 associé à l'agent intégrateur AI1. L'arbre de contenance peut être entièrement compris dans l'agent intégrateur AI1. Pour simplifier la description, on a choisi de séparer, sur la figure, l'arbre de contenance MIB1 et l'agent intégrateur AI1. De manière générale, ce type d'arbre, à cause de l'utilisation du langage de type SML, stocke un type quelconque de données, c'est-à-dire des données ayant une arborescence quelconque et une syntaxe quelconque. Cet arbre MIB1 assure une représentation virtuelle du monde réel qui entoure le système de gestion SG. C'est une représentation virtuelle que l'utilisateur UT ou qu'un administrateur manipule (surveillance, action) pour gérer le monde réel. La représentation virtuelle porte sur des objets virtuels du monde réel et constitue un modèle objet. Dans l'exemple illustré, le monde réel est matérialisé par la machine MAC.

Par définition, l'arbre de contenance MIB1 est orienté objet et est constitué de noeuds et de branches. Cet arbre comprend en ses noeuds l'ensemble des objets gérés par le système de gestion SG. De manière générale et connue de l'homme du métier, pour créer un objet dans cette base MIB1, il faut choisir sa classe, le nommer conformément aux liens de nommage relatifs à la classe, et donner une valeur à ses attributs. Un objet géré est une vue abstraite, définie pour les besoins de gestion, d'une ressource logique ou physique d'un système. Une classe d'objets gérés est un ensemble nommé d'objets gérés partageant les mêmes propriétés. Un attribut est une caractéristique d'un objet géré qui a un type nommé et une valeur. La valeur d'un attribut d'un objet peut être consultée ou modifiée par une requête adressée à l'objet. Nommer un objet d'une classe donnée, c'est choisir, conformément aux liens de nommage possibles, ce que l'homme du métier appelle le plus souvent son Global Distinguished Name, c'est-à-dire choisir son supérieur dans l'arbre de nommage et choisir son Relative Distinguished Name vis-à-vis de ce supérieur. Le nommage des objets fait appel à un arbre de nommage. Chaque objet se situe dans l'arbre de nommage par rapport à un supérieur dont il est le subordonné. Cette relation subordonnée-supérieure est spécifiée au niveau des classes par un lien de nommage (NAME BINDING en anglais). Lors de la création d'un objet, il faut choisir un seul lien de nommage parmi les liens de nommages possibles pour les objets de cette classe. Plusieurs liens de nommage peuvent être définis pour une même classe, mais un objet ne peut avoir qu'un seul supérieur immédiat.

Dans la suite de la description, deux noeuds de cet arbre, reliés par l'intermédiaire d'une branche et appartenant à deux classes différentes, seront dits noeuds dépendants.

Plusieurs opérations ou manipulations peuvent s'appliquer sur les attributs à condition que celles-ci ait été autorisée lors de la spécification de la classe dans l'arbre de contenance MIB1. Les opérations incluent les commandes « get attribute value » ou encore « replace attribute value ». De même, des opérations peuvent s'appliquer sur des objets. Les opérations peuvent être du type :

- « Create » pour la création d'un objet d'une classe

- « Delete » pour demander à un objet géré de se détruire

- « Action » pour demander à un objet d'exécuter une action spécifiée dans la définition de la classe.

De manière générale, une interface de programmation de type API (Application Program Interface), connue de l'homme de métier, interface l'application APP et le routeur CDSP ainsi que le routeur CDSP et l'agent intégrateur AI1.

Dans l'exemple illustré, le routeur CDSP route une requête issue de l'application APP vers une destination finale. Concrètement, le routeur CDSP route des requêtes issues de l'application d'administration APP en direction de l'agent intégrateur approprié. Une requête, est de manière générale, une manipulation d'objets sur une machine distante. Dans l'exemple illustré, une requête REQ1 est issue de l'application APP. Par définition, ce routeur mémorise le contexte et route également une réponse en direction de l'application qui est à l'origine de l'interrogation.

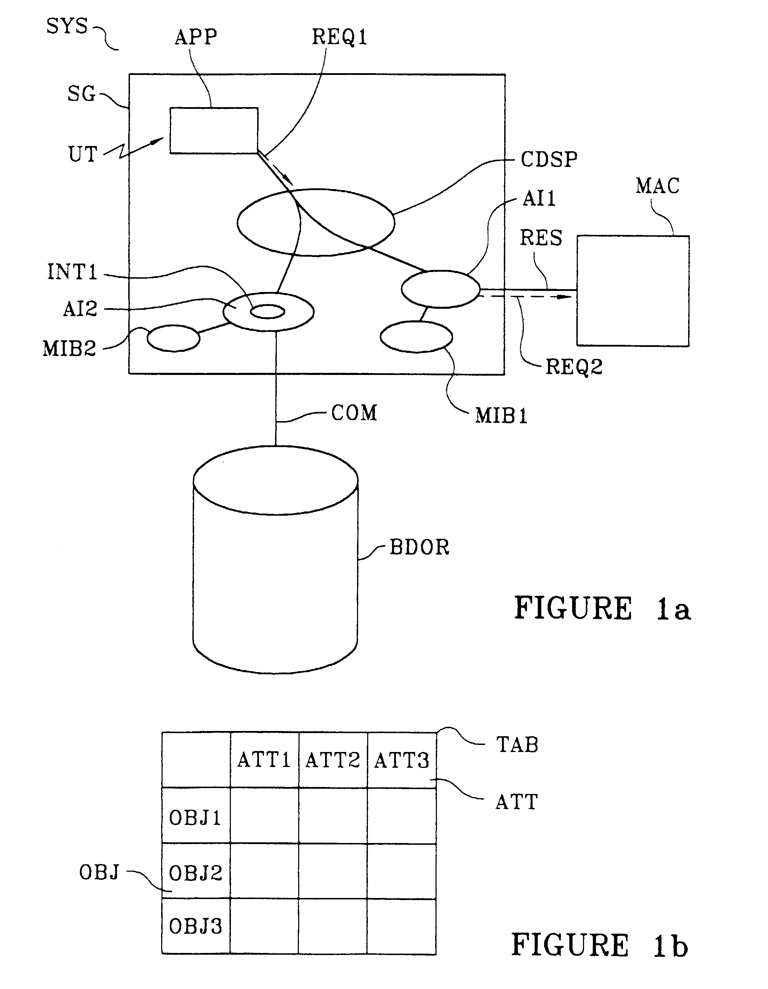

Naturellement, le serveur de gestion SG peut comprendre plusieurs agents intégrateurs. L'agent intégrateur AI1 et la machine MAC sont reliés par l'intermédiaire d'un réseau RES de type quelconque. Le réseau RES peut être de type LAN (Local Area Network) ou WAN (Wide Area Network) ou Internet. Un ensemble de couches logicielles s'interpose entre le système de gestion SG et le réseau RES et entre le réseau et la machine MAC. Cet ensemble de couches logicielles repose sur le modèle OSI (Open System Interconnection) d'architecture en couche de l'ISO (International Organization for Standardization), connu de l'homme du métier. Pour des raisons de simplification de la description, cet ensemble de couches logicielles n'est pas représenté sur la figure 1.

Conformément à l'invention, le système informatique SYS comprend également au moins une autre machine associée à un protocole de gestion de type SQL.NET connu de l'homme du métier. Cette machine est une base de données BDDR. Cette base de données est de type relationnelle. L'invention ne se limite pas à ce type de base de données, mais s'applique à toutes bases de données dont le modèle est comparable au modèle relationnel. Cette base BDDR utilise un langage standard de définition et de manipulation de données appelé langage SQL. Cette base comprend, généralement, au moins une table TAB assimilable à une matrice. Cette table TAB est de type logicielle.

Une vue de la table TAB est représentée sur la figure 1b. Chaque colonne de la table est associée à un attribut ATT. Dans l'exemple illustré, cette table TAB comprend trois attributs ATT1-ATT3. Chaque ligne d'une table est associée à un objet OBJ. Dans l'exemple illustré, la table TAB comprend tois objets OBJ1-OBJ3. L'ensemble constitué par tous les attributs d'un même objet définit ce que l'homme du métier appelle un « tuple » TUP. Une requête de type SQL sur cette table donne la valeur de l'attribut associé à l'objet.

La base de données BDDR est reliée au système de gestion SG par l'intermédiaire d'une liaison de communication physique COM quelconque. La liaison de communication COM peut être de type LAN (Local Area Network) ou WAN (Wide Area Network) ou Internet. Un ensemble de couches logicielles s'interpose entre le système de gestion SG et la liaison COM. De même, un ensemble de couche logicielle s'interpose entre la liaison COM et la base de données relationnelle BDDR. Cet ensemble de couche logicielle se repose sur le modèle OSI (Open System Interconnection) d'architecture en couche de l'ISO (International Organization for Standardization). Pour des raisons de simplification de la description, cet ensemble de couche logicielle n'est pas représenté sur la figure 1.

Chaque composant référencé de ce système informatique échange des messages. Dans l'exemple illustré, ces messages sont transportés par l'intermédiaire de PDU (Protocol Data Unit), connu de l'homme du métier.

Deux types d'application peuvent être distingués, à savoir les applications dites génériques et les applications dites spécifiques. Les applications dites génériques sont des applications qui peuvent gérer tous les objets présents dans l'arbre de contenance MIB1 ou MIB2. Ce type d'application peut manipuler toutes les classes d'objets présents dans la base MIB1 ou MIB2. Une classe d'objets est un ensemble nommé d'objets gérés partageant les mêmes propriétés. La définition d'une classe d'objets gérés constitue la spécification de ces objets. Un objet est une instance de la classe. Les applications dites spécifiques sont celles qui gèrent seulement des composants spécifiques du système.

Le gros problème est que la communication entre le système de gestion SG et la base de données de type relationnelle BDDR est complexe en raison de la disparité des protocoles entre ces deux entités. Une conversion de protocole de type CMIS en un protocole de type, par exemple SQL.NET, est considérée comme étant pratiquement impossible à réaliser dans un sens ou dans un autre.

A cet effet, le procédé de l'invention consiste, pour un utilisateur UT de l'application d'administration APP à accéder directement à une base de données relationnelle BDDR à partir d'une application d'administration de type CMIS/CMIP.

Pour ce faire, le système de gestion SG inclut un agent intégrateur A12 ayant une configuration préalable.

L'agent intégrateur AI2 créé est, tout comme l'agent AI1, de nature logicielle. Dans l'exemple illustré, la base de données relationnelle BDDR est reliée au routeur CDSP par l'intermédiaire de l'agent intégrateur AI2. Selon un un exemple, une interface de programmation de type API (Application Program Interface), connue de l'homme de métier, interface le routeur CDSP et l'agent intégrateur AI2.

L'agent intégrateur AI2 est intégré au système de gestion et s'ajoute à l'agent intégrateur AI1.

la configuration préalable de l'agent intégrateur AI2 consiste à convertir le schéma propre à la base de données relationnelle en un modèle de type CMIS/CMIP. Plus précisément, la conversion consiste à archiver dans un arbre de contenance MIB2, sous forme d'objets de type CMIS, les objets de la base de données relationnelle BDDR. Un ensemble de noeuds de cet arbre de contenance MIB2 comprend les informations nécessaires à identifier au moins un attribut d'un objet de la base de données relationnelle BDDR. Des classes objets sont créées dans cet arbre MIB2 pour représenter virtuellement des objets de type SQL.

Dans l'exemple illustré, l'arbre de contenance MIB2 est associé à l'agent intégrateur AI2.

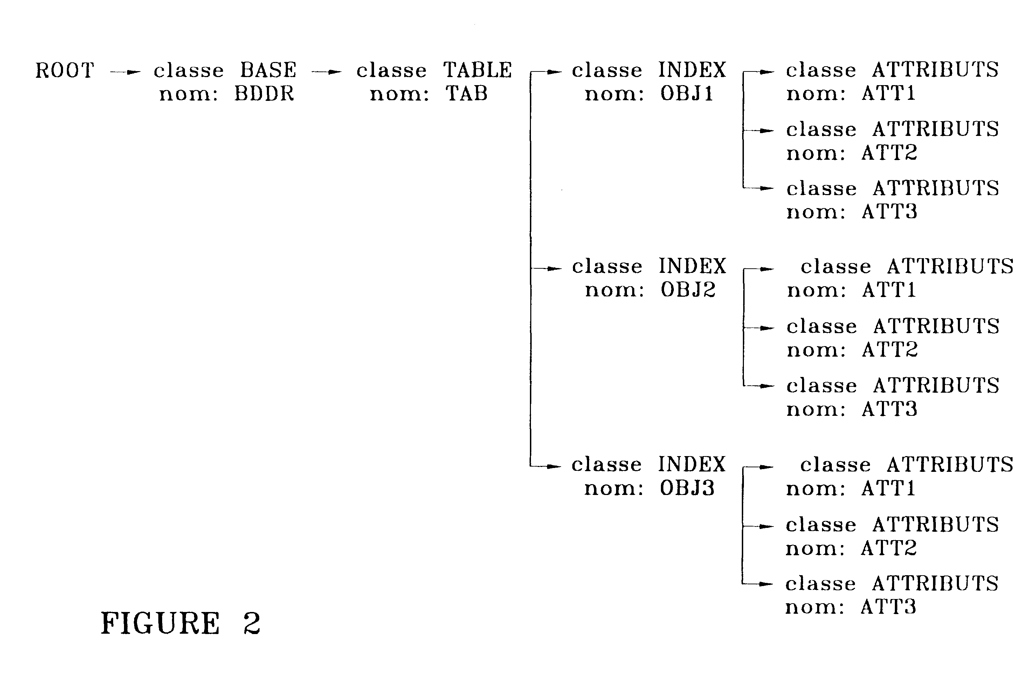

La figure 2 représente une vue partielle de l'arbre de contenance MIB2. Cet arbre MIB2 est, tout comme l'arbre de contenance MIB1, constitué de noeuds et de branches. De même, deux noeuds de cet arbre reliés par l'intermédiaire d'une branche et appartenant à deux classes différentes seront dits noeuds dépendants.

Cet arbre de contenance MIB2 comprend une racine dite ROOT. Dans un exemple, à partir de cette racine, il y a autant de classes BASE créées qu'il y a de bases de données existantes dans le système. De même, à partir d'une classe BASE, il y a autant de classes TABLE créées qu'il y a de tables existantes dans la base de donnée correspondante. De même, à partir d'une classe TABLE, il y a autant de classes INDEX créées qu'il y a d'objets dans la table correspondante. Une classe INDEX est créée à des fins évoquées dans l'introduction. Enfin, à partir d'une classe INDEX, il y a autant de classes ATTRIBUTS créées qu'il y a d'attributs dans la table correspondante.

L'exemple illustre, Il y a une classe BASE créée et une classe TABLE créée. Dans l'exemple illustré, la table TAB comprend neufs attributs ATT1-ATT9. Il y a donc neuf classes ATTRIBUTS créées. Les objets créés dans l'arbre de contenance MIB2 comprennent au moins une classe et un nom conformément aux liens de nommage relatifs à la classe. Les informations nécessaires évoquées précédemment constituent les informations qui suffisent à identifier au moins un attribut dans une table BDDR. Selon un exemple, le procédé consiste donc à placer en des noeuds dépendants ces informations nécessaires. Par exemple, on associe à la classe BASE créée le nom de la base de données relationnelle BDDR. On associe à la classe TABLE créée le nom de la table TAB inclue dans la base de données BDDR. On associe à chaque classe INDEX créée un nom d'objet. Concrètement, on associe à une classe INDEX l'objet OBJ1. De même, on associe à une classe INDEX l'objet OBJ2. Demême, on associe à une classe INDEX l'objet OBJ3.

Enfin, on associe à chaque classe ATTRIBUTS, subordonnée à une classe INDEX créée, un nom d'attibut de la table TAB. Concrètement, on associe à une classe ATTRIBUTS le nom de l'attribut ATT1 inclu dans la table TAB. De même, on associe à une classe ATTRIBUTS le nom de l'attibut ATT2 inclu dans la table TAB. De même, on associe à une classe ATTRIBUTS le nom de l'attibut ATT3 inclu dans la table TAB.

Dans l'exemple illustré, un ensemble de noeuds dépendants et subordonnés constitue les informations nécessaires à sélectionner au moins un attribut d'un objet que l'on souhaite manipuler. Des informations nécessaires sont, selon un exemple, un nom de base de données relationnelle BDDR, ajouté à un nom de table, ajouté à un nom d'objet. Ces informations sont nécessaires pour sélectionner l'ensemble des attributs d'un même objet.

Selon un autre exemple, les informations nécessaires sont un nom de base de données relationnelle BDDR, ajouté à un nom de table, ajouté à un nom d'objet et ajouté à un nom d'attributs. Ces informations sont nécessaires pour sélectionner un attribut d'un objet.

Le procédé est illustré en référence aux figures 1 et 2.

Une première étape consiste à développer et lancer une application APP propre au protocole CMIS. Dans l'exemple illustré, la requête REQ1 résultante de l'application APP est constituée d'au moins une commande conforme au protocole CMIS. Dans l'exemple illustré, la requête REQ1 est constituée d'une commande dite « GET » suivie du nom d'un objet à manipuler et de l'attribut ou des attributs associé(s) à cet objet.

Selon un exemple, il consiste à coder dans la requête REQ1 les informations nécessaires à identifier les attributs d'un objet dans une table BDDR. Dans cet exemple, la requête REQ1 peut être du type :

GET (/ SQL ID = nom de l'agent intégrateur - SQL/ BASE ID = nom de la base / TABLE ID = nom d'une table/ INDEX ID = nom du tuple sélectionné/)

Une seconde étape consiste à transférer cette requête REQ1 sur le routeur. Ce routeur traite la requête et détermine l'agent intégrateur associé à ce type de requête. Plus précisément, le routeur interprète le nom de l'agent intégrateur inclut dans la requête REQ1 et détermine l'agent intégrateur approprié dans l'arbre de contenance MIB2 Dans l'exemple illustré, la requête REQ1 est dirigée en direction de l'agent intégrateur AI2 de type SQL.

Une troisième étape consiste, par l'intermédiaire de l'agent intégrateur AI2, à interpréter les autres informations contenues dans la requête. L'agent AI2 décompose et décrypte le nom de l'objet. Le résultat de cette décomposition et de ce décryptage donne les informations nécessaires à identifier au moins un attribut d'un objet dans une table de la base de données BDDR. En d'autres mots, le résultat de ce décryptage est directement la concaténation de :

- un nom de base de type SQL,

- un nom de table inclut dans cette base,

**EP 0 969 627 A1**

- un nom d'attribut ou d'un tuple dans cette table.

Dans l'exemple illustré, le nom de l'objet OBJ à manipuler est, en terme syntaxique, un nom de base BDDR, un nom de table TAB et un nom d'attribut ATT de type SQL.

Dans l'exemple illustré, le procédé consiste à générer les commandes propres au langage de la base de donnée BDDR. A cet effet, la génération d'une requête REQ2 conforme au protocole de la base de données BDDR consiste à créer, préalablement au lancement de l'application APP, une interface INTI comprenant les commandes propres au protocole de gestion de la base de données BDDR. De même, cette interface INT1 comprend les commandes propres au protocole de gestion du système de gestion SG pour transmettre une réponse issue de la base de données BDDR en direction de l'application APP à l'origine de la manipulation. Dans l'exemple illustré, cette interface est inclu dans l'agent intégrateur AI2. Cette interface est une interface logicielle.

Dans l'exemple illustré, l'interface créée est de type SML-SQL. Le langage SML est le langage de programmation de l'agent intégrateur AI2 et le langage SQL est le langage de programmation de la base de données relationnelle BDDR. Cette interface SML-SQL est un ensemble de commandes particulières propres à la génération de programmes de type SQL pour réaliser la communication avec la base de données relationnelle. Un ensemble de commandes particulières constitue des commandes créées, par exemple par l'utilisateur UT du système de gestion SG, pour des besoins spécifiques.

A cet effet, une quatrième étape consiste à interroger, par l'intermédiaire de l'agent intégrateur AI2, à interroger l'interface SML-SQL. Plus précisément, l'interface SML-SQL procure deux types de fonctionnalités :

1 - Une première fonctionnalité consiste, comme indiqué ci-dessus, à construire automatiquement la requête REQ2 de type SQL. A cette fin, l'interface comprend un programme. Ce programme inclut des paramètres correspondant aux informations issues du décryptage, c'est-à-dire :

- le nom de base de type SQL,

- le nom de la table inclue dans cette base,

- le nom d'attribut ou d'un tuple dans cette table.

L'interface insère automatiquement ces informations dans ce programme. A ce stade, une requête de type SQL est générée par l'agent intégrateur AI2. Un exemple d'un programme nommé « sql-build-select » est donné en annexe 2 et donne un exemple de réalisation d'une construction de la requête REQ1.

Une cinquième étape consiste, en sortie de l'agent intégrateur, à générer la requête REQ2. La requête REQ2 générée a la forme suivante:

SELECT < nom du ou des attributs >

FROM < nom de la table >

WHERE < Index = nom de l'attribut ou des attributs >

2 - Une deuxième fonctionnalité de l'interface SML-SQL est la possibilité pour l'agent AI2 de communiquer avec la base de données BDDR. A cet effet, cette interface gère la connexion et la déconnexion du système de gestion SG. En effet, pour pouvoir accéder à une base de données, un utilisateur doit être identifié en tant que tel dans le système. Pour ce faire, par exemple si la base de données est de type ORACLE (marque déposée), l'utilisateur doit avoir un nom, un mot de passe, un ensemble de privilèges. Cette connexion est ce que l'homme du métier appelle « LOGIN ». L'interface prend ainsi en compte le type de la base de données. De même, pour une base de données de type INGRES (marque déposée), l'interface autorise la connexion si l'utilisateur fourni le nom de la base. Cette fonction comprend aussi des outils de gestion de transactions. Elle procure des commandes du type COMMIT ou ROLLBACK pour contrôler la validation et l'annulation des transactions. Cette deuxième fonctionnalité est procuré par l'intermédiaire d'un programme. Un programme nommé « sql-login » illustre cette fonctionnalité et est donné en annexe B. La commande COMMIT valide la transaction en cours. De cette manière, les modifications de la base BDDR deviennent définitives et visibles par les autres utilisateurs.

Une sixième étape consiste donc pour l'interface SML-SQL à connecter le système de gestion SG à la base de données BDDR.

La commande ROOLBACK annule la transaction en cours. La base est alors restaurée dans son état au début d'une transaction.

L'interface peut contenir d'autres commandes utiles pour la transaction. Les deux fonctionnalités de l'interface SML-SQL peuvent se dérouler dans un ordre quelconque.

Une septième étape consiste, pour la base de données BDDR, à traiter la requête et à fournir en réponse la valeur de l'attribut d'une table sujet de l'interrogation. Ce traitement est propre à la base de données. La base traite des requêtes de la même manière qu'elle traite des requêtes émanant de client selon une architecture client/serveur, connue de l'homme du métier.

Une huitième étape consiste, pour la base de données BDDR, à émettre une réponse. La réponse est émise en direction de l'agent intégrateur Al2 selon le protocole de la base de donnée BDDR. Concrètement, le message de réponse est du type connu de l'homme du métier :

-RESPONSE < nom de l'attribut > < valeur de l'attribut >

où < valeur de l'attribut > est le résultat de la requête.

Une neuvième étape consiste, pour l'agent intégrateur Al2, à recevoir et à traiter la réponse issue de la base de données relationnelle BDDR. L'agent intégrateur AI2 reçoit la réponse comprenant la valeur de l'attribut objet de l'interrogation. L'agent intégrateur AI2 décrypte le message de réponse de la même façon qu'il a décrypté la requête initiale.

Une dixième étape consiste, pour l'agent intégrateur AI2, à consulter son interface SML-SQL et à émettre une requête de type CMIS incluant l'information issue de la base de données BDDR en utilisant les deux fonctionnalités de l'interface SML-SQL.

Une onzième étape consiste à émettre la réponse en direction de l'application à l'origine de la requête. La réponse est transmise au routeur CDSP qui, de part sa fonction de mémorisation du contexte, transmet la réponse en direction de l'application APP concernée.

Cette suite d'étapes a lieu d'être grâce à une configuration de l'agent intégrateur AI2 de type SQL. Cette configuration est réalisée préalablement à l'exécution de l'application. Il est donc nécessaire de configurer, au préalable, tout ou partie des bases de données présentes dans le système dans l'arbre de contenance. Cette configuration, incluse dans l'arbre de contenance MIB2 comme indiqué ci-dessus, consiste à y introduire le nom d'au moins une base existante, le nom d'au moins une table existante et le nom d'au moins un attribut existant que l'on souhaite interfacer et rendre visible sur le système de gestion SG. Cette introduction peut être effectuée manuellement ou par l'intermédiaire d'une application spécifique de configuration. Cette application de configuration peut être un système automatique qui permet à un utilisateur de choisir tout ou partie des tables qu'il souhaite interfacer.

D'une manière générale, on peut dire que l'invention a pour objet un procédé d'accès à au moins une base de données relationnelle BDDR d'un système informatique SYS à partir d'au moins un système de gestion SG, une base de données relationnelle BDDR étant associée à un protocole de gestion et comprenant des objets OBJ manipulables, un système de gestion SG incluant au moins une application d'administration APP associée à un protocole de gestion de type CMIS/CMIP et dont est issue une requête REQ1, et un arbre de contenance MIB2 orienté objet, ledit arbre MIB2 comprenant des objets conformes au protocole de gestion CMIS/CMIP, caractérisé en ce qu'il consiste, pour un utilisateur de l'application d'administration APP, au moyen d'un agent intégrateur A12 ayant une configuration préalable, à accéder directement à une base de données relationnelle BDDR à partir d'une application d'administration de type CMIS/CMIP. En d'autres termes, la configuration préalable de l'agent intégrateur A12 consiste à convertir un schéma propre à la base de données relationnelle en un modèle de type CMIS/CMIP exploitable par le système de gestion et tout particulièrement par une application de type CMIS/CMIP. On a vu, par exemple, que la conversion consiste à archiver dans l'arbre de contenance MIB2, sous forme d'objets de type CMIS, les objets de la base de données relationnelle BDDR. Un ensemble de noeuds de cet arbre de contenance MIB2 comprend les informations nécessaires à identifier au moins un attribut d'un objet de la base de données relationnelle BDDR.

On a vu, dans un exemple, que l'utilisation de l'arbre de contenance MIB2 consiste à placer en au moins un noeud de cet arbre le nom d'une base de données relationnelle BDDR, en au moins un noeud le nom d'une table, et en au moins un noeud le nom d'un tuple. On a vu aussi, dans un exemple, que le procédé consiste à inclure dans une requête REQ1 issue de l'application d'administration APP au moins un nom d'une base de données, au moins un nom d'une table de cette base, et au moins un nom de tuple de cette table.

Le procédé de l'invention a lieu d'être grâce à une configuration préalable de l'agent intégrateur AI2. La génération d'une requête conforme au protocole de la base de données BDDR consiste à créer, préalablement au lancement de l'application APP, une interface comprenant les commandes propres au protocole de gestion de la base de données BDDR. De même, il convient de créer, préalablement au lancement de l'application APP, une interface comprenant les commandes propres au protocole de gestion du système de gestion SG pour transmettre une réponse issue de la base de données BDDR en direction de l'application APP à l'origine de la manipulation.

On a vu aussi l'intérêt d'utiliser un langage de programmation extensible dans l'agent intégrateur AI2. En l'occurence, ce langage est de type SML. Ce langage est interprété et fournit des outils qui étendent de manière simple la liste des commandes disponibles.

L'invention a aussi pour objet corollaire, un système informatique SI comprenant au moins un système de gestion SG incluant au moins une application de type CMIS/CMIP et au moins un arbre de contenance MIB2, ledit système informatique SI comprenant au moins une base de données BDDR, et le système de gestion SG comportant un agent intégrateur AI2t tel que défini précédemment. De préférence, l'agent intégrateur inclut des commandes propres au protocole de la base de données ainsi que les commandes propres au protocole de l'application. Dans l'exemple illustré, on a vu que l'agent intégrateur comprend des moyens de décryptage de messages pour déterminer des informations nécessaires à manipuler un objet inclu dans une base de données.

La communication entre une application développée dans un environnement de type CMIS et une base de données s'effectue donc de manière simple, en ce sens que grâce au procédé de l'invention il n'est pas nécessaire d'effectuer de correspondance entre l'application et le langage d'interrogation de la base de données. En outre, le procédé de l'invention permet une visibilité des différents objets de la base de données BDDR par l'intermédiaire de l'arbre de contenance MIB2. Les objets de la base de données sont désormais accessibles à partir d'applications dites génériques. Ceci a pour avantage d'accéder à un objet quelconque de la base de données en naviguant l'arbre de contenance et par l'intermédiaire d'une commande quelconque. Un autre avantage est qu'il est désormais possible de réaliser une surveillance (monitoring en anglais) des objets présents dans une base de données dont le modèle est de type relationnel. Avantageusement, le procédé profite des fonctionnalités d'archivage existante. Le procédé consiste à ajouter du code au code existant à l'origine de l'agent intégrateur. Ce code ajouté comprend les méthodes de décryptage et les commandes nécessaire à la génération des requêtes. Cette base archive sous forme d'objet de type CMIS la configuration de l'agent intégrateur de type SQL. L'invention tire profit d'une caractéristique du langage de type SML en ce qu'il est extensible. En effet, ce langage fournit des outils qui étendent de manière simple la liste des commandes disponibles. Le langage SML est un langage interprété. Cette interface SML-SQL est donc un ensemble de commandes particulières propre à la génération de programmes de type SQL pour réaliser la communication avec la base de données relationnelle.

**ANNEXE 1**

sql-build-select

**     Action

**     Build an SQL Select request.

**     Syntax

**     (sql-build-select attribute-list table-list

**     [condition-list])

**     Description

**     This function builds the following SQL Select request:

**     select attribute-list from table-list [where conditions]

**     where:

***   1.*attribute-list is an SML atom or list of atoms giving attribute
              names.

***   2.*table-list is an SML atom or list of atoms giving table or view
              name(s).

***   3.*conditions are SQL condition clauses obtained from condition-list.

If condition-list

***   is omitted, there will be no "where" condition clause in the
              generated SQL Select

***   request.

**  The sql-build-select function returns an SQL Select request as a
       string in the

**  form of a list: this may then be passed directly to the sql-exec
       function which

**  submits the request to the database server.

ANNEXE 2

sql-login

**  Action

**  Connect to a database server.

**  Syntax
       21
       (sql-login connectid)

**  Description

**  This function opens a connection to a database server identified by
       connectid.

**  This parameter is a string specifying the database server name (INGRES
       or ORACLE)

**  and the native database user connection identifier, as follows:

***  1.*for INGRES: INGRES::<databasename>

***  *example: INGRES::testdb

***  2.*for ORACLE:
       ORACLE::<username>/<password>[@<serverId>]

****  example: ORACLE::scott/tiger

**  Note: The shell variables used by the appropriate database must also
       be set.

**  If the connection is successful, this function returns t, otherwise,
       the sql-error

**  function is called and nil is returned.

**Revendications**

1.  Procédé d'accès à au moins une base de données relationnelle (BDDR) d'un système informatique (SYS) à partir d'au moins un système de gestion (SG), une base de données relationnelle (BDDR) étant associée à un protocole de gestion et comprenant des objets (OBJ) manipulables, un système de gestion (SG) incluant au moins une application d'administration (APP) associée à un protocole de gestion de type CMIS/CMIP et dont est issue une requête (REQ1), et un arbre de contenance (MIB2) orienté objet, ledit arbre (MIB2) comprenant des objets conformes au protocole de gestion CMIS/CMIP, caractérisé en ce qu'il consiste, pour un utilisateur de l'application d'administration (APP), au moyen d'un agent intégrateur (A12) ayant une configuration préalable, à accéder directement à une base de données relationnelle (BDDR) à partir d'une application d'administration de type CMIS/CMIP.

2. Procédé d'accès selon la revendication 1, caractérisé en ce que la configuration préalable de l'agent intégrateur (A12) consiste à archiver dans l'arbre de contenance MIB2, sous forme d'objets de type CMIS/CMIP, les objets de la base de données relationnelle BDDR, et en ce qu'un ensemble de noeuds de cet arbre de contenance MIB2 comprend les informations nécessaires à identifier au moins un attribut d'un objet de la base de données relationnelle (BDDR).

3. Procédé selon l'une des revendications 1 ou 2, caractérisé en ce que l'utilisation de l'arbre de contenance (MIB2) consiste à placer en au moins un noeud de cet arbre le nom d'une base de données relationnelle (BDDR), en au moins un noeud le nom d'une table (TAB), et en au moins un noeud le nom d'un tuple (TUP).

4. Procédé selon l'une des revendications 1 à 3, caractérisé en ce qu'il consiste à inclure dans une requête (REQ1) issue de l'application d'administration APP au moins un nom d'une base de données, au moins un nom d'une table de cette base, et au moins un nom de tuple de cette table.

5. Procédé selon l'une des revendications 1 à 4, caractérisé en ce que la génération d'une requête (REQ) conforme au protocole de la base de données (BDDR) consiste à créer, préalablement au lancement de l'application (APP), une interface comprenant les commandes propres au protocole de gestion de la base de données (BDDR).

6. Procédé selon l'une des revendications 1 à 5, caractérisé en ce qu'il consiste à créer, préalablement au lancement de l'application APP, une interface comprenant les commandes propres au protocole de gestion du système de gestion (SG) pour transmettre une réponse issue de la base de données (BDDR) en direction de l'application (APP) à l'origine de la manipulation.

7. Procédé selon l'une des revendications 1 à 6, caractérisé en ce qu'il consiste à utiliser, dans l'agent intégrateur (AI2), un langage de programmation extensible.

8. Système informatique (SI) comprenant au moins un système de gestion (SG) incluant au moins une application de type CMIS/CMIP et au moins un arbre de contenance (MIB2), ledit système informatique (SI) comprenanrt au moins une base de données (BDDR), caractérisé en que le système de gestion (SG) comporte un agent intégrateur (AI2) pour la mise en oeuvre du procédé conformément aux revendications 1 à 8.

9. Système selon la revendication 8, caractérisé en ce que l'agent intégrateur inclut des commandes propres au protocole de la base de données ainsi que les commandes propres au protocole de l'application.

10. Système selon l'une des revendications 8 ou 9, caractérisé en ce que l'agent intégrateur comprend des moyens de décryptage de messages pour déterminer des informations nécessaires à manipuler un objet inclu dans une base de données.

SYS

APP

REQ1

SG

UT

CDSP

AI1

MAC

RES

INT1

AI2

MIB2

REQ2

MIB1

COM

BDOR

## FIGURE 1a

| | ATT1 | ATT2 | ATT3 |
|------|------|------|------|
| OBJ1 | | | |
| OBJ2 | | | |
| OBJ3 | | | |

TAB

ATT

OBJ

## FIGURE 1b

ROOT → classe BASE → classe TABLE → classe INDEX → classe ATTRIBUTS
nom: BDDR    nom: TAB    nom: OBJ1    nom: ATT1

classe ATTRIBUTS
nom: ATT2

classe ATTRIBUTS
nom: ATT3

classe INDEX → classe ATTRIBUTS
nom: OBJ2    nom: ATT1

classe ATTRIBUTS
nom: ATT2

classe ATTRIBUTS
nom: ATT3

classe INDEX → classe ATTRIBUTS
nom: OBJ3    nom: ATT1

classe ATTRIBUTS
nom: ATT2

classe ATTRIBUTS
nom: ATT3

## FIGURE 2

EP 0 969 627 A1

**Office européen des brevets**

## RAPPORT DE RECHERCHE EUROPEENNE

Numéro de la demande

EP 99 40 1597

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>Y | EP 0 624 964 A (PLESSEY TELECOMM)<br>17 novembre 1994 (1994-11-17)<br>* abrégé *<br>* colonne 1, ligne 1 - colonne 4, ligne 37 *<br>* colonne 5, ligne 6-20 *<br>* figure 1 * | 1,4-6,<br>8-10<br><br>2 | H04L12/24 |
| A | CHOPRA M ET AL: "TOWARD STANDARDIZATION OF THE AIN SLEE AND SMS INTERFACE" INTELLIGENT NETWORKS: THE PATH TO GLOBAL NETWORKING, PROCEEDINGS OF THE INTERNATIONAL COUNCIL FOR COMPUTER COMMUNICATION INTELLIGENT NETWORKS CONFERENCE, TAMPA, MAY 4 - 6, 1992,<br>4 mai 1992 (1992-05-04), pages 472-482,<br>XP000684042<br>BAYLISS P W (ED )<br>* abrégé *<br>* page 473, ligne 1 - page 475, ligne 8 * | 1-10 | |
| Y<br><br><br><br><br><br><br><br>A | YODA I ET AL: "METHODS FOR CONSTRUCTING A MANAGEMENT INFORMATION BASE (MIB) IN TRANSMISSION NETWORK OPERATIONS" ELECTRONICS & COMMUNICATIONS IN JAPAN, PART I - COMMUNICATIONS,<br>vol. 76, no. 9,<br>1 septembre 1993 (1993-09-01), pages 21-33, XP000449114<br>* page 21, colonne de gauche, ligne 1-5 *<br>* page 22, colonne de gauche, ligne 1-11 - colonne de droite, ligne 4-17 *<br>* page 23, colonne de droite, ligne 5-17 *<br>* page 24, colonne de droite, ligne 35 - page 26, colonne de droite, ligne 4 * | 2<br><br><br><br><br><br><br><br>3 | **DOMAINES TECHNIQUES RECHERCHES (Int.Cl.7)**<br><br>H04L |

-/--

Le présent rapport a été établi pour toutes les revendications

| Lieu de la recherche | Date d'achèvement de la recherche | Examinateur |
|---|---|---|
| LA HAYE | 5 novembre 1999 | Lievens, K |

EPO FORM 1503 03.82 (P04C02)

**Office européen des brevets**

## RAPPORT DE RECHERCHE EUROPEENNE

Numéro de la demande

EP 99 40 1597

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | EP 0 702 312 A (BULL SA) 20 mars 1996 (1996-03-20) * abrégé * * page 2, ligne 40 - page 3, ligne 30 * * page 5, ligne 53 - page 6, ligne 46 * * figure 2 * ----- | 1-10 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 5 novembre 1999 | Lievens, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**            EP 99 40 1597

La présente annexe indique les membres de la famille de brevets relatifs aux documents brevets cités dans le rapport de recherche européenne visé ci–dessus.
Lesdits membres sont contenus au fichier informatique de l'Officeeuropéen des brevets à la date du
Les renseignements fournis sont donnés à titre indicatif et n'engagent pas la responsabilité de l'Office européen des brevets.

05-11-1999

| Document brevet cité au rapport de recherche | | Date de publication | Membre(s) de la famille de brevet(s) | | Date de publication |
|---|---|---|---|---|---|
| EP 0624964 | A | 17-11-1994 | GB | 2278000 A | 16-11-1994 |
| | | | JP | 7006066 A | 10-01-1995 |
| EP 0702312 | A | 20-03-1996 | FR | 2724471 A | 15-03-1996 |
| | | | CA | 2156227 A | 14-03-1996 |
| | | | US | 5832498 A | 03-11-1998 |

EPO FORM P0460

Pour tout renseignement concernant cette annexe : voir Journal Officiel de l'Office européen des brevets, No.12/82